# EUROPÄISCHE PATENTANMELDUNG

(11) **EP 1 260 951 A2**
(43) Veröffentlichungstag der Anmeldung: **27.11.2002**
(21) Anmeldenummer: 02010611.8
(22) Anmeldetag: 10.05.2002
(51) Int. Cl.: G08C 19/00

(54) **Mobile Bedien-und/oder Beobachtungseinrichtung mit Feldbusanschluss, insbesondere für industrielle Prozesse**

(30) Priorität: 22.05.2001 DE 10125235
(71) Anmelder: SIEMENS AKTIENGESELLSCHAFT, 80333 München (DE)
(72) Erfinder: Rieger, Gottfried, 90766 Fürth (DE)

(57) **Zusammenfassung**

Die mobile Bedien- und/oder Beobachtungseinrichtung (2) weist auf eine Datenübertragungsstrecke (22) und eine stationäre Ankoppeleinheit (20) an einen Feldbus (1) mit einer Feldbusschnittstelle (203), einer stationären Schnittstelle (204) an die Datenübertragungsstrecke (22) und stationären Mitteln (201,202) zur Verarbeitung von Daten. Weiterhin ist vorhanden eine mobile Einheit (21) mit einer mobilen Schnittstelle (211) an die Datenübertragungsstrecke (22), lokalen Mitteln (212,213) zur Verarbeitung von Daten und Mitteln (214) zu Eingabe, Anzeige und/oder Ausgabe von Daten. Die Einrichtung hat den Vorteil, dass einerseits eine ununterbrochene Ankopplung an den Feldbus (1) unter Einhaltung von dessen Übertragungsprotokoll gewährleistet ist, andererseits die mobile Einheit (21) eine davon quasi unabhängige Handhabung ermöglicht.

## Beschreibung

Mobile Bedien- und/oder Beobachtungseinrichtung mit Feldbusanschluss, insbesondere für industrielle Prozesse

Bei der Steuerung, Bedienung und Beobachtung von insbesondere technischen Prozessen, z.B. mit Hilfe von speicherprogrammierbaren Steuerungen, werden hohe Anforderungen an die Güte von Bussystemen gestellt, die zur Übertragung von Daten zwischen dem jeweiligen technischen Prozess und den Betriebsmitteln einer Steuerung eingesetzt werden. Derartige Bussysteme müssen neben einer sehr hohen Verfügbarkeit insbesondere die Eigenschaft der deterministischen Echtzeitfähgkeit aufweisen, d.h. es muss möglich sein den Zeitraum zu bestimmen, der zur Ausführung einer Aktion benötigt wurde. Solche Eigenschaften weisen sogenannte "Feldbusse" auf.

Damit diese Eigenschaften gewährleistet werden können, sind Feldbusse für den stationären Betrieb ausgelegt, d.h. alle am Bus angeschlossenen bzw. angemeldeten Teilnehmer sind ständig in einem aktiven Zustand. Ein dynamisches An- und Abkoppeln von Betriebsmitteln ist nicht vorgesehen. Andernfalls würde die Busverbindung möglicherweise eine Fehlermeldung generieren. Geräte, bei denen nicht ständig gewährleistet werden kann, dass deren Busverbindung aktiv ist, können somit nicht an einen Feldbus angeschlossen werden.

Auf Grund dieser Randbedingungen sind die Einsatzmöglichkeiten von Bedien- bzw. Beobachtungseinrichtung, die an einem industriellen Feldbus angeschlossen sind, eingeschränkt. Bedien- bzw. Beobachtungseinrichtungen, d.h. sogenannte "B und B Geräte", sind somit bislang z.B. in Form von sogenannten Bedienpanels in der Regel fest installiert. Nur auf diese Weise kann ein ständig aktiver Anschluss an einen Feldbus unter gleichbleibenden physikalischen Anschlussbedingungen gewährleistet werden. Es liegt dann auch eine stabile Bustopologie mit unveränderter Verkabelung und gleichbleibenden Anschluss- und Übertragungsbedingungen vor, wie z.B. mit geringen Reflexionen und dergleichen.

Bedien- bzw. Beobachtungseinrichtung, die an einem industriellen Feldbus angeschlossen sind, können von Benutzern somit derzeit überwiegend nur ortsfest genutzt werden.

Der Erfindung liegt die Aufgabe zugrunde, eine Bedienund/oder Beobachtungseinrichtung anzugeben, die trotz einer Ankopplung an einen industriellen Feldbus einen mobilen Einsatz ermöglicht.

Die Aufgabe wird gelöst mit der im Anspruch 1 angegebenen mobilen Bedien- und/oder Beobachtungseinrichtung.

Die mobile Bedien- und/oder Beobachtungseinrichtung weist gemäß der Erfindung eine stationäre Ankoppeleinheit und eine mobile Einheit auf, die über eine Datenübertragungsstrecke miteinander verbunden sind. Dabei stellt einerseits die stationäre Ankoppeleinheit eine feste datentechnische und topologisch unveränderte Verbindung zum Feldbus über eine integrierte Feldbusschnittstelle dar. Demgegenüber ist die mobile Einheit quasi frei beweglich, wobei lediglich die Gegebenheiten der jeweiligen Datenübertragungsstrecke gewisse Beschränkungen verursachen können. Bei einer Kabelverbindung als Datenübertragungsstrecke könne dies Leitungslängen sein, während bei einer Funkverbindung als Datenübertragungsstrecke die jeweilige Übertragungsreichweite.

Die erfindungsgemäße mobile Bedien- und/oder Beobachtungseinrichtung weist den besonderen Vorteil auf, dass durch deren stationäre Ankoppeleinheit die betrieblichen und topologischen Besonderheiten eines Feldbusses erfüllt werden können. Die stationäre Ankoppeleinheit ist als Teilnehmer am Feldbus ständig aktiv. Ferner bleiben deren physikalische Anschlussbedingungen unverändert, d.h. insbesondere die Längen der jeweiligen Anschlussstichleitung. Hierdurch werden geforderte Eigenschaften eines Feldbusses, wie hohe Verfügbarkeit und auch hohe Datenübertragungsrate, nicht beeinträchtigt. Andererseits ist die mobile Einheit der erfindungsgemäßen mobilen Bedien- und/oder Beobachtungseinrichtung hiervon völlig unabhängig und kann somit z.B. auch vorübergehend von der stationären Ankoppeleinheit getrennt werden, ohne dass dadurch der Betrieb des Feldbusses gestört wird.

Weitere vorteilhafte Ausführungen der erfindungsgemäßen mobilen Bedien- und/oder Beobachtungseinrichtung sind in den Unteransprüchen angegebenen.

Die Erfindung wird an Hand der nachfolgend kurz angegebenen Figuren näher erläutert. Dabei zeigt
- Figur 1:: eine Prinzipschaltbild für die erfindungsgemäße mobile Bedien- und/oder Beobachtungseinrichtung, wobei die Datenübertragungseinrichtung als eine Kabelverbindung ausgeführt ist,
- Figur 2:: eine erste, beispielhafte Ausführungsform für die erfindungsgemäße mobile Bedien- und/oder Beobachtungseinrichtung, wobei die mobile Bedieneinheit als ein Handheld ausgeführt ist, und
- Figur 3:: eine zweite, beispielhafte Ausführungsform für die erfindungsgemäße mobile Bedien- und/oder Beobachtungseinrichtung, wobei die mobile Bedieneinheit als ein mobiles Panel und die Datenübertragungseinrichtung als eine Funkverbindung ausgeführt sind.

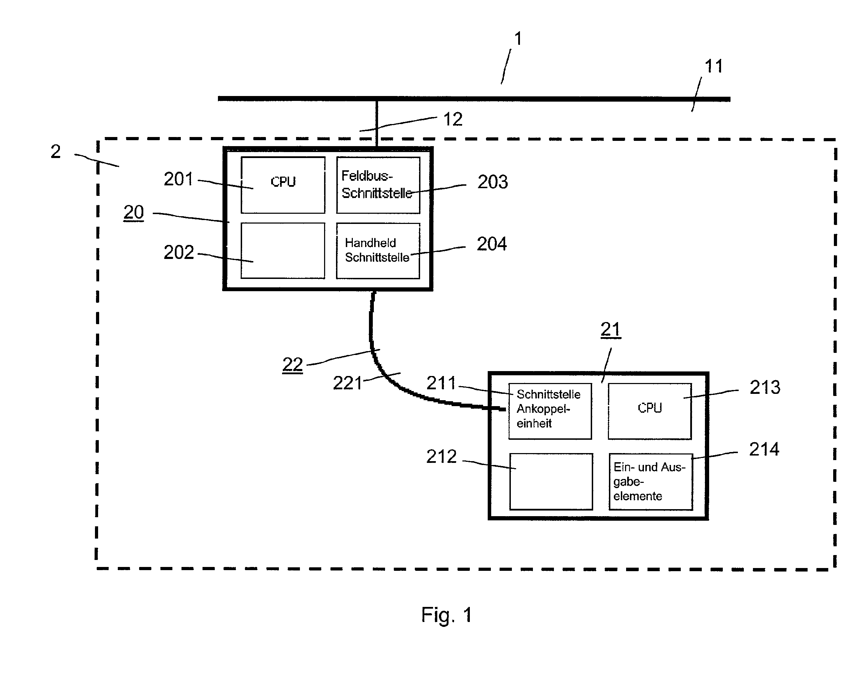

In der Figur 1 ist beispielhaft ein Ausschnitt eines Feldbusses 1 gezeigt, der eine Bushauptleitung 1 aufweist. An diese ist mit Hilfe einer möglichst kurzen Anschlussstichleitung 12 eine mobile Bedien- und/oder Beobachtungseinrichtung 2 angeschlossen. Diese ist gemäß der Erfindung in eine stationäre Ankoppeleinheit 20, eine mobile Einheit 21 und eine die Ankoppeleinheit und die mobile Einheit verbindende Datenübertragungsstrecke 22 aufgeteilt.

Mit Hilfe der stationären Ankoppeleinheit 20 wird einerseits eine, alle Spezifikationen des Feldbusses 1 erfüllende Ankopplung der mobilen Bedien- und/oder Beobachtungseinrichtung 2 erreicht. Hierzu ist eine Feldbusschnittstelle 203 in die Ankoppeleinheit 20 integriert. Andererseits dient die stationäre Ankoppeleinheit 20 auch zum datentechnischen Anschluss der mobilen Einheit 21 der Bedien- und/oder Beobachtungseinrichtung 2. Hierzu ist stationäre Schnittstelle 204 in die Ankoppeleinheit 20 integriert. Im Beispiel der Figur 1 ermöglicht die Schnittstelle 204 den Anschluss einer Kabelverbindung 221 als Datenübertragungsstrecke 22. Zur Verarbeitung und Aufrechterhaltung des Datenstromes zwischen der Bushauptleitung 11 des Feldbusses 1 und der mobilen Einheit 21 weist die stationäre Ankoppeleinheit 20 weiterhin eine stationäre Verarbeitungseinheit 201 und lokale Betriebsmittel 202, z.B. wie z.B. Speicher, auf. Die Funktion der stationären Ankoppeleinheit 20 kann somit mit der eines sogenannten Gateway's verglichen werden.

Die mobile Einheit 21 der erfindungsgemäßen mobilen Bedienund/oder Beobachtungseinrichtung 2, weist einerseits eine mobile Schnittstelle 211 für Ankoppeleinheit 20 auf, an die in Figur 1 die Kabelverbindung 221 der Datenübertragungsstrecke 22 angeschlossen ist. Als Hauptbausteine sind Mittel 214 zur Eingabe, Anzeige und/oder Ausgabe von Daten integriert. Hierbei kann es sich um Anzeigeelemente, wie z.B. LED Anzeigefelder für z.B. Prozessdaten handeln. Als Eingabeelemente können z.B. Tastenelemente oder auch ein großflächiges Touchfeld vorhanden sein. Schließlich können zur Datenausgabe auch z.B. eine Infrarotschnittstelle oder Mikroprinter vorgesehen sein. Für die Verarbeitung der über die Datenübertragungsstrecke 21 mit der Ankoppeleinheit 20 ausgetauschten Datenströme sind zumindest eine mobile Verarbeitungseinheit 213 und weitere lokale Betriebsmittel 212, wie z.B. eine Ansteuerelektronik vorgesehen.

Während die stationäre Ankoppeleinheit 20 eine ständigen datentechnischen Anschluss der mobilen Bedien- und Beobachtungseinrichtung 2 gemäß dem Kommunikationsprotokoll des Feldbusses 1 ermöglicht, stellt die Datenübertragungsstrecke 22 eine sogenannte "Punkt zu Punkt" Verbindung zwischen der stationären Ankoppeleinheit 20 und der mobilen Einheit 21 her. Hierdurch ist ein hoher Grad an mobiler Selbständigkeit sowohl in lokaler als auch zeitlicher Hinsicht für die mobile Einheit 21 möglich. Insbesondere ist es nicht erforderlich, dass die mobile Einheit 21 in einer ununterbrochenen Kommunikationsverbindung mit der stationären Ankoppeleinheit 20 steht. Vielmehr kann die mobile Einheit 21 von einem Benutzer auch nur für kurze Bedienzeiten aktiviert werden. Hierdurch kann der Verbrauch an elektrischer Energie in der mobilen Einheit 21 erheblich gesenkt werden, während die stationäre Ankoppeleinheit 20 zur Aufrechterhaltung einer ununterbrochenen Feldbusankopplung eine vollwertige Stromversorgung aufweist. Die Ankoppeleinheit kann somit auch die Funktion eines Datenpufferung übernehmen z.B. in Zeiten, in denen die mobile Einheit inaktiv geschaltet ist und keine Daten entgegennehmen kann.

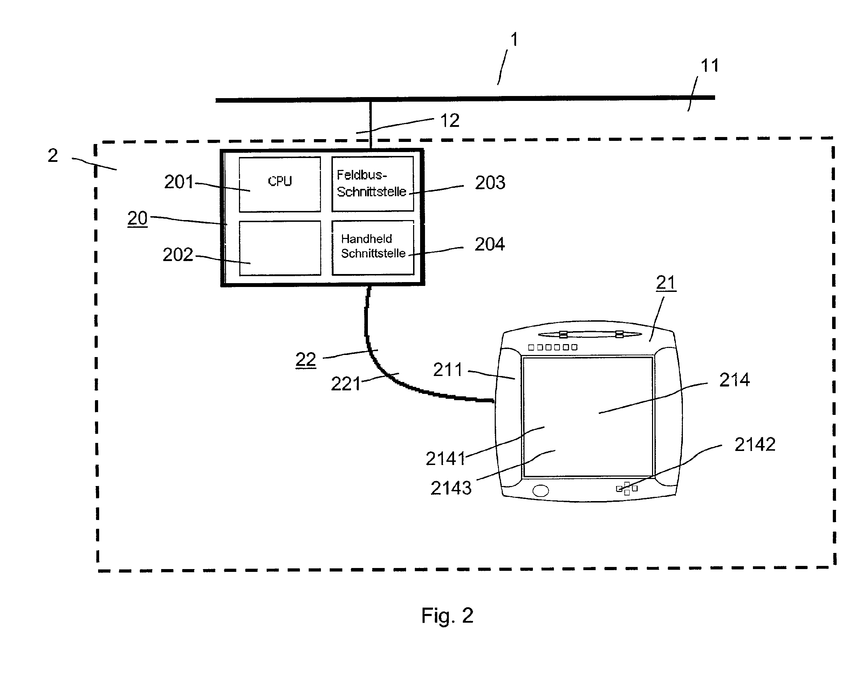

Im Beispiel der Figur 2 ist die mobile Einheit 21 z.B. in Form eines sogenannten Handheld's ausgeführt. Dieses kann z.B. die Form eines flachen Tableaus aufweisen und von einer Bedienperson über seitliche Griffmulden gehalten werden. Im Zentrum des Handheld's ist als ein Mittel 214 zur Eingabe, Anzeige und/oder Ausgabe von Daten ein großflächiges LED Anzeigefeld 2143 platziert. Als Eingabeelemente sind weiterhin Tastenelemente 2142 und ein großflächiges Touchfeld 2141 vorhanden. Das Handheld 21 und die stationäre Ankoppeleinheit 20 sind auch in der Ausführung von Figur 2 über eine Kabelverbindung 221 als Datenübertragungsstrecke 22 miteinander verbunden.

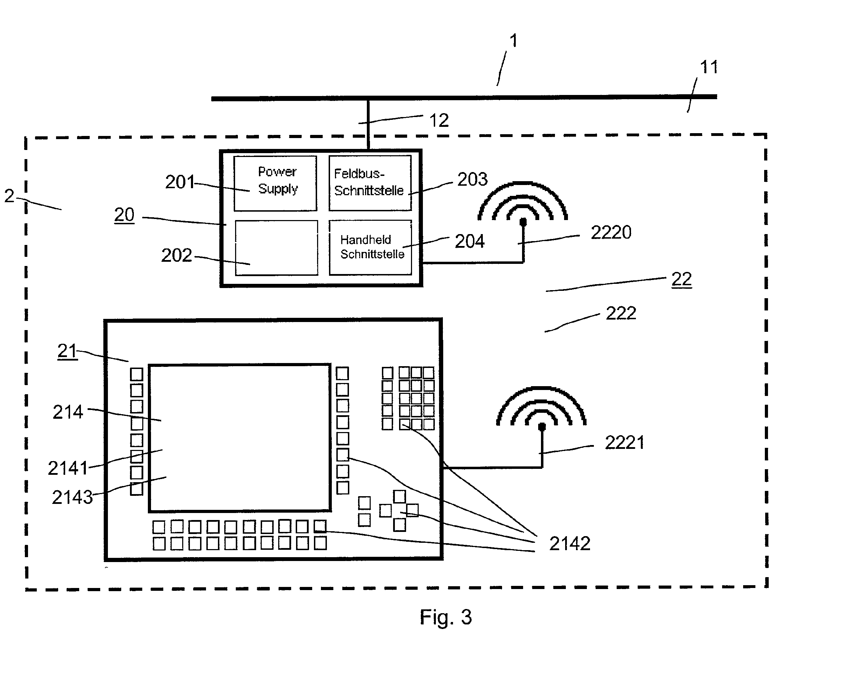

Demgegenüber ist im Ausführungsbeispiel der Figur 3 die Datenübertragungsstrecke 22 in Form einer Funkverbindung 222 ausgeführt, welche eine Antenne 2220 an der stationären Ankoppeleinheit und eine Antenne 2221 an der mobilen Einheit aufweist. Im Beispiel der Figur 3 ist die mobile Einheit 21, in Form eines sogenannten mobiles Panel's ausgeführt. Dieses kann in einer weiteren, nicht dargestellten mobilen Einrichtung integriert sein. Neben einer Vielzahl von feldartig gruppierten Tastenelementen 2142 weist auch das mobile Panel ein großflächiges LED Anzeigefeld 2143 und ein davor angeordnetes Touchfeld 2141 auf.

## Patentansprüche

1. Mobile Bedien- und/oder Beobachtungseinrichtung (2), insbesondere für industrielle Prozesse, mit
a) einer Datenübertragungsstrecke (22),
b) einer stationären Ankoppeleinheit (20) an einen Feldbus (1,11,12), mit
b1) einer Feldbusschnittstelle (203)
b2) einer stationären Schnittstelle (204) an die Datenübertragungsstrecke (22), und
b3) stationären Mitteln (201,202) zur Verarbeitung von Daten, und
c) einer mobilen Einheit (21), mit
c1) einer mobilen Schnittstelle (211) an die Datenübertragungsstrecke (22),
c2) lokalen Mitteln (212,213) zur Verarbeitung von Daten, und
c3) Mitteln (214) zu Eingabe, Anzeige und/oder Ausgabe von Daten.

2. Mobile Bedien- und/oder Beobachtungseinrichtung (2) nach Anspruch 1, **gekennzeichnet durch** eine Kabelverbindung (221) als Datenübertragungsstrecke (22).

3. Mobile Bedien- und/oder Beobachtungseinrichtung (2) nach Anspruch 1, **gekennzeichnet durch** eine Funkverbindung (222, 2220, 2221) als Datenübertragungsstrecke (22).

4. Mobile Bedien- und/oder Beobachtungseinrichtung (2) nach einem der Ansprüche 1 bis 3, **gekennzeichnet durch** ein Handheld (Figur 2) als mobile Einheit (21).

5. Mobile Bedien- und/oder Beobachtungseinrichtung (2) nach einem der Ansprüche 1 bis 3, **gekennzeichnet durch** ein mobiles Panel (Figur 3) als mobile Einheit (21).

6. Mobile Bedien- und/oder Beobachtungseinrichtung (2) nach einem der vorangegangenen Ansprüche, **dadurch gekennzeichnet, dass** die mobile Einheit (21) zumindest ein Touchfeld (2141) zur Dateneingabe aufweist.

7. Mobile Bedien- und/oder Beobachtungseinrichtung (2) nach einem der vorangegangenen Ansprüche, **dadurch gekennzeichnet, dass** die mobile Einheit (21) zumindest eine LED Anzeigefeld (2143) zur Datenanzeige aufweist.
